# EUROPEAN PATENT SPECIFICATION

(11) **EP 4 089 612 B1**
(45) Date of publication and mention of the grant of the patent: **28.01.2026**
(21) Application number: 21756340.2
(22) Date of filing: 08.02.2021
(51) Int. Cl.: G06Q 30/06, G06Q 30/0601

(54) **ARTICLE DISPLAY PROCESSING METHOD AND APPARATUS AND ELECTRONIC DEVICE**
ARTIKELANZEIGE-VERARBEITUNGSVERFAHREN UND -VORRICHTUNG UND ELEKTRONISCHE VORRICHTUNG
PROCÉDÉ ET APPAREIL DE TRAITEMENT D'AFFICHAGE D'ARTICLE, ET DISPOSITIF ÉLECTRONIQUE

(30) Priority: 20.02.2020 CN 202010105327
(43) Date of publication of application: 16.11.2022
(73) Proprietor: ALIBABA GROUP HOLDING LIMITED, George Town, Grand Cayman (KY)
(72) Inventor: XIAO, Chenzhe, Hangzhou, Zhejiang 311121 (CN); DENG, Jiajia, Hangzhou, Zhejiang 311121 (CN); TANG, Xing, Hangzhou, Zhejiang 311121 (CN); HE, Mei, Hangzhou, Zhejiang 311121 (CN); WANG, Mengwei, Hangzhou, Zhejiang 311121 (CN); GUO, Xi, Hangzhou, Zhejiang 311121 (CN); JIA, Chengyue, Hangzhou, Zhejiang 311121 (CN); ZHU, Jingjing, Hangzhou, Zhejiang 311121 (CN); ZENG, Lincheng, Hangzhou, Zhejiang 311121 (CN)
(74) Representative: Marks & Clerk LLP
(86) International application number: PCT/CN2021/075938
(87) International publication number: WO 2021/164604

(56) References cited:
- WO-A2-2005/038581
- CN-A- 103 778 538
- CN-A- 108 648 276
- CN-A- 110 543 684
- US-A1- 2004 113 945
- US-A1- 2010 161 288
- US-A1- 2011 061 011
- US-A1- 2011 161 802
- US-B1- 7 062 722
- US-B1- 7 062 722
- US-B2- 8 930 844
- M. MUSTAFA: "Presenting a product design from computer-generated imagery (cgi)", THESES AND DISSERTATIONS. 1495., 1 December 2019 (2019-12-01), University for Business and Technology - UBT, XP093286064, Retrieved from the Internet <URL:https://knowledgecenter.ubt-uni.net/etd/1495> [retrieved on 20250611]

## Description

### CROSS-REFERENCE TO RELATED APPLICATIONS

This application claims priority to Chinese Patent Application No. 202010105327.0, filed with the China National Intellectual Property Administration on February 20, 2020, and entitled "ARTICLE DISPLAY PROCESSING METHOD AND APPARATUS AND ELECTRONIC DEVICE".

### TECHNICAL FIELD

This application discloses an article display processing method and apparatus and an electronic device, and belongs to the field of computer technologies.

### BACKGROUND

In the environment of online shopping, during shopping for furniture, it is difficult for users to determine whether the furniture to be purchased matches a set environment, and the users often find that an effect presented after the furniture is combined with the surroundings is not good after the furniture is bought home, and even find that the size of the furniture is not suitable. After these cases happen, the costs of returning and exchanging are relatively high, resulting in poor shopping experience for the users.

### SUMMARY

Embodiments of this application provide an article display processing method and apparatus, to improve a display effect of displaying an article online.

To implement the objective, an embodiment of this application provides an article display processing method, including:
obtaining, in response to a display request from a first user for a selected article, an environment template corresponding to the article;
generating a display image with the selected article as a main view angle according to feature data of the selected article and the environment template; and
sending the display image to a client of the first user for display.

An embodiment of this application further provides an article display processing method, including:
obtaining, in response to a display request from a first user for a selected article, a plurality of environment templates matched with the selected article;
obtaining configuration information of any one or more of feature data of the selected article, the environment templates, and an article observation view angle by the first user, and generating a display image according to the configuration information; and
sending the display image to a client of the first user for display.

An embodiment of this application further provides an article display processing apparatus, including:
a first environment template obtaining module, configured to obtain, in response to a display request from a first user for a selected article, an environment template corresponding to the article;
a first display image generation module, configured to generate a display image with the selected article as a main view angle according to feature data of the selected article and the environment template; and
a first display image sending module, configured to send the display image to a client of the first user for display.

An embodiment of this application further provides an article display processing apparatus, including:
a second environment template obtaining module, configured to obtain, in response to a display request from a first user for a selected article, a plurality of environment templates matched with the selected article;
a second display image generation module, configured to obtain configuration information of any one or more of feature data of the selected article, the environment templates, and an article observation view angle by the first user, and generate a display image according to the configuration information; and
a third display image sending module, configured to send the display image to a client of the first user for display.

An embodiment of this application further provides an article display processing method, including:
triggering, in response to a first operation of a user in a first article display interface for displaying basic article information, to enter a second article display interface for displaying a state of an article in a display environment;
loading original image data of the article and one or more environment templates;
determining an attribute feature of the article and a selected environment template in response to a configuration operation of the user in the second article display interface; and
generating, according to the original image data and the attribute feature of the article, and the environment template, a display image in which the article is placed in the environment, and displaying the display image in the second article display interface.

An embodiment of this application further provides an electronic device, including:
a memory configured to store a program; and
a processor, configured to run the program stored in the memory, to perform the foregoing article display processing method.

According to the article display processing method and apparatus and the electronic device provided in the embodiments of this application, a to-be-displayed article is fused with a preset environment template for article display, allowing a user to efficiently observe a display effect of the article placed in an environment.

The foregoing description is merely an overview of the technical solutions of this application. To understand the technical means of this application more clearly, implementation can be performed according to content of the specification. Moreover, to make the foregoing and other objectives, features, and advantages of this application more comprehensible, implementations of this application are particularly described below.

### BRIEF DESCRIPTION OF THE DRAWINGS

FIG. 1 is a schematic diagram of an application scenario of an article display processing technology, according to an embodiment of this application.
FIG. 2 is a first schematic flowchart of an article display processing method, according to an embodiment of this application.
FIG. 3 is a second schematic flowchart of an article display processing method, according to an embodiment of this application.
FIG. 4 is a first schematic structural diagram of an article display processing apparatus, according to an embodiment of this application.
FIG. 5 is a second schematic structural diagram of an article display processing apparatus, according to an embodiment of this application.
FIG. 6 is a schematic structural diagram of an electronic device, according to an embodiment of this application.

### DETAILED DESCRIPTION

The following describes in detail exemplary embodiments of the present disclosure with reference to the accompanying drawings. Although the accompanying drawings show the exemplary embodiments of this application, it should be understood that this application may be implemented in various manners and is not limited by the embodiments described herein. Rather, these embodiments are provided, so that this application is more thoroughly understood and the scope of this application is completely conveyed to a person skilled in the art.

With the development of network technologies, life and work are increasingly carried out online. In some scenarios, people do not have access to physical articles, but hope to be able to see a display effect of the articles online, especially a matching effect of the articles with their surroundings. Such a need is common in online shopping. Before making a purchase, a buyer user wants to better examine whether an article matches the surroundings and whether an expected effect of the user is presented when the article is placed in a target environment. To purchase furniture online, for example, the furniture is typically large, if the furniture is bought and placed in the home, and it is later found that the furniture does not match the environment, returning and exchanging the furniture is more difficult. Therefore, if a display effect of the furniture in a home environment can be observed in advance via an online display, a better buying decision may be made, to reduce the probability of problems when the furniture arrives.

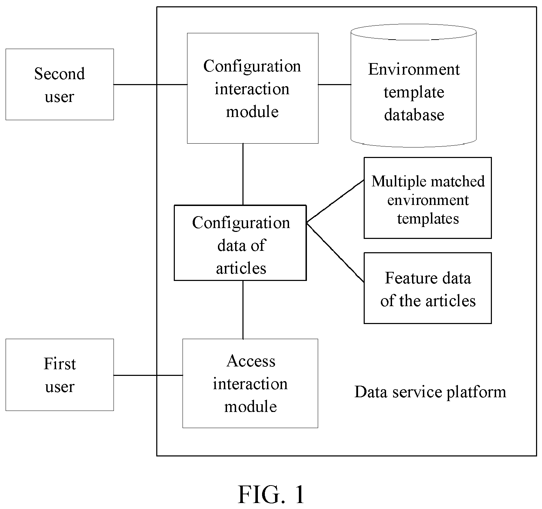

An embodiment of this application provides an article display processing technology to meet the foregoing requirement. Based on pre-configured environment templates, an article display image in which environment elements are fused is generated in combination with user-selected articles online. The displayed article is positioned at a main view angle in the display image, allowing the user to completely observe a matching effect of the article with the environment. FIG. 1 is a schematic diagram of an application scenario of an article display processing technology, according to an embodiment of this application. The technology may be completed by a cloud-based data service platform. The data service platform may be a platform that provides e-commerce services or a platform that provides other article display services, or the like. The data service platform may be pre-configured with a database having various environment templates, and may perform fusion and rendering processing on a to-be-displayed article and an environment template. The data service platform may provide access service to a first user as a visitor of an article display, for example, an access interaction module shown in the figure executes the function. In addition, the data service platform may also provide a data configuration service of configuring a to-be-displayed article and an environment template to a second user as a provider of the article display, for example, a configuration interaction module shown in the figure. After the second user configures an article, configuration data corresponding to the article may be generated and stored in the data service platform. The configuration data mainly includes feature data of the article and a plurality of environment templates that match the article. When the first user accesses the to-be-displayed article, the data service platform generates a display image according to the configuration data. E-commerce is used as an example. The first user may be a user as a customer or a buyer, and the second user may be a user as a merchant or a seller.

The environment templates and a matching relationship between articles and the environment templates may be pre-configured. Each article may be configured with a plurality of environment templates, and the environment template is formed by combining a plurality of environment elements. Different environment templates are different environment element combinations. The second user may select an environment template adapted to a to-be-displayed article from an environment template database provided by the data service platform and establish a mapping relationship. In addition, the second user may select one environment template from the plurality of configured environment templates as a default environment template for initially displaying an article selected by the first user. When viewing an article display, the first user may change environment elements in the environment templates, to switch between different environment templates. Because the environment template or matching of the environment template with the article is pre-configured, pre-rendering processing may be performed. Therefore, the article can be displayed with high efficiency when the user switches the display of articles and the display of templates online. The environment elements may include hard furnishing elements and soft furnishing elements. The hard furnishing elements are, for example, a type and a size of a house, material and color of a wall, and material and color of a floor. The soft furnishing elements involve surrounding articles around a displayed article, for example, if the displayed article is a sofa, the surrounding articles may include a coffee table, a floor lamp, household appliances, and the like. In addition, feature data of the displayed article may include color, a size, and an appearance of the article. The feature data may also be changed online by the first user. Selling furniture online is still used as an example, a merchant may pre-configure furniture with optional feature data, for example, pre-configuring sofas of a plurality of models, and provide some color and size options. A buyer user may change the feature data within a range configured by the merchant while browsing the display. Because the merchant pre-configures environment templates, images obtained after fusing the environment templates with articles of different feature data may be pre-rendered. Within the pre-configured range, a user changes both the environment template and feature parameters of the article. Therefore, it is equivalent to pre-processing a to-be-displayed image, and the display image may be displayed rapidly.

In this embodiment of this application, an article selected by the first user is displayed at a main view angle in the displayed image, allowing the first user to more intuitively view a display effect of the article in an environment. In addition, because an environment template corresponding to a to-be-display article is pre-configured, the article and the environment template may be fused and rendered in advance, allowing the first user to obtain a more efficient online effect display.

In addition, when the first user views a display image of an article, there may also be a case that the first user is interested in another article as an environment element. In this case, the first user also needs to display the another article in the environment. If the second user pre-configures an environment template for the another article, an interaction interface with the another article as a to-be-displayed article may be switched to, and a display image with the another article as a main view angle combined with the corresponding environment template is generated.

In addition, in another implementation, after the first user has selected an article, the first user is presented with an interaction interface for configuring any one or more of feature data of the article, an environment template, and an article observation view angle. The interaction interface provides the user with a plurality of options for these aspects, allowing the user to configure a feature of the article, an environment element, and an observation view angle according to requirements, thereby achieving an article display effect that better meets the requirements of the user.

In addition, the technical solution of this embodiment of this application may be further extended for application. In the interaction interface displayed to the user for displaying articles, prices of a plurality of displayed articles, as products, displayed in a display environment may be counted, so that an overall quotation of the plurality of displayed articles in the display environment is displayed to the user. Alternatively, the user may select a plurality of displayed articles in a display environment and then generate an overall quotation, for example, a unified quotation is performed after a sofa, a coffee table, a carpet, cushions on the sofa, and tea sets on the coffee table are displayed as a whole. Such a display interaction method helps to provide the user with a combination of a product display and a sales mode, so that a limitation of an individual selling and purchasing mode is overcome, which benefits both the merchant and the user. In addition, other similar products may be further recommended according to a style of a product selected by the user for display, to provide the user with a better choice that meets the requirements of the user. The user temporarily selects a simple style coffee table. In this scenario, the data service platform may find similar coffee table pictures according to the style of the coffee table and display the coffee table pictures to the user, and the user may replace the recommended coffee table in an environment for display and comparison.

In addition, the user may further send or share a finally generated display image in which the article is incorporated into the environment by using social media, instant messaging software, or an e-mail, thereby achieving an information transfer and sharing display effect.

The technical solution of this application is further described by using some specific embodiments below.

### Embodiment 1

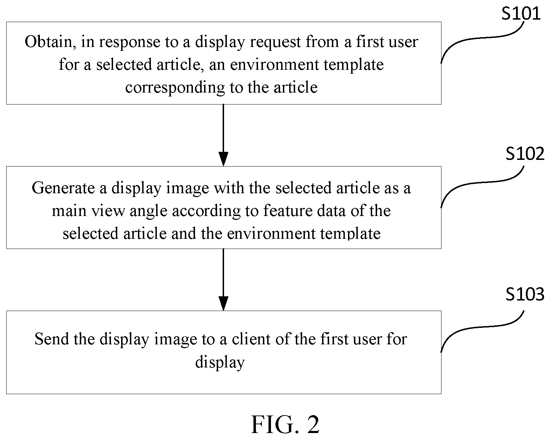

FIG. 2 is a first schematic flowchart of an article display processing method, according to an embodiment of this application. The method is applicable to a data service platform that can provide an article display service. Both article-related data and display environment-related data are stored in the data service platform. The data service platform can process image data, can fuse and render an article and an environment template, and can send a generated display image to a client accessing the data service platform. Specifically, the method includes the following steps.

S101. Obtain, in response to a display request from a first user for a selected article, an environment template corresponding to the article. The display request may be triggered by an operation by the first user on an access interaction interface provided by the data service platform for the article. The access interaction interface may be a page that displays article information. For example, to sell furniture online, the first user, as a buyer, visits a page of a furniture product, and the page has related introduction information, price information, pictures of the product. In addition, function buttons such as buttons for adding products to a shopping cart, buying products, and adding products to favorites are also set in the page. In addition, in this embodiment of this application, a button for environment display may be further provided. When the first user clicks/taps the button, the display request in the step is triggered, to jump to a display interface in which the article is displayed in a simulated environment, and a display image generated in the following steps is displayed in the interface.

The environment template may include a plurality of environment elements. An indoor environment is used as an example, and the environment elements may include hard furnishing environment elements and/or soft furnishing environment elements. The hard furnishing elements are, for example, a type and a size of a house, material and color of a wall, and material and color of a floor. The soft furnishing elements involve surrounding articles around a displayed article, for example, if the displayed article is a sofa, the surrounding articles may include a coffee table, a floor lamp, household appliances, and the like.

In this embodiment of this application, the environment template may be pre-configured by a second user as a provider of article display. The data service platform may provide a database that stores a large quantity of environment templates for the second user to perform selection, as well as an interaction interface for configuring a corresponding environment template. Therefore, the method may further include: selecting, in response to a configuration operation of a second user on an article, one or more environment templates as environment templates matched with the article from an environment template database, where the environment templates respectively correspond to a plurality of different environment element combinations. After the one or more environment templates are selected as the environment templates matched with the article, a rendering file obtained by fusing the article and the environment templates may be further generated and used for generating a display image according to a requirement of the second user. The processing may be generally performed as a pre-configuration operation. That is, before a to-be-displayed article is released, the article and a corresponding environment template are pre-configured. One environment template of the environment templates matched with the to-be-displayed article and configured by the second user may be specified as a default environment template. When receiving the display request from the first user, the data service platform may directly invoke the default environment template to perform subsequent processing. In addition, the second user may alternatively not set a default environment template, but the data service platform randomly selects an environment template.

S102. Generate a display image with the selected article as a main view angle according to feature data of the selected article and the environment template. The feature data of the article may include color, a size, an appearance, and the like of the article. The feature data of the article may be included in the display request, or the display request includes an article number of the article. The data service platform may invoke the feature data corresponding to the article according to the article number. In this step, image synthesis processing is performed according to the feature data of the article and the environment template. In the generated display image, the displayed article is positioned at the main view angle, allowing the user to fully observe a matching effect of the article with the environment. The main view angle described herein refers to that the article is located at a core position of the environment or a focal position of a visual picture, and a main objective thereof is to allow the user to better observe, with the article as a center, an effect after the article is fused with the environment. Further, as described above, the second user may pre-configure a combination relationship between the environment templates and the article and form the rendering file obtained by fusing the article and the environment templates. Therefore, in step S102, the display image with the selected article as the main view angle may be generated according to the feature data of the selected article, the environment template, and the rendering file.

It should be noted that, the rendering file generated when the second user performs pre-configuration may be only a rendering file generated by performing rendering processing based on basic feature data of an article and an environment template and the rendering file, as an intermediate file, may be pre-stored in configuration data related to the article. Because the feature data of the article may include a plurality of factors such as a size, color, and a material, after the second user selects a specific article, a final display image is generated according to specific feature data of the article and a previously pre-generated rendering file.

S103. Send the display image to a client of the first user for display. After generating a display image, the data service platform may send the display image to a client of the first user and display the display image in a responsive display interface.

After viewing the display image fused with the environment template in the display interface, the first user may perform a change operation on environment elements. The data service platform obtains a new environment template in response to the change operation, and displays the selected article based on the new environment template, that is, performing step S102 and step S103 again. For example, a displayed article is a sofa. The first user may replace soft furnishing elements such as a matched coffee table and carpet and may further replace hard furnishing elements such as color of a wall and a size of a room. In the display interface, the change operation of the first user on the environment elements may be limited in a range of matched environment templates pre-configured by the second user. In this way, because the environment template and the article are fused and rendered in advance, a new display image can be quickly generated in response to the change operation of the first user. In addition, the first user may also change the feature data such as color and a size of the article, and a display image is generated and displayed based on new feature data and the environment template.

In addition, other articles than the displayed article are also involved in the environment template. The articles may also have a correlation with other to-be-displayed articles, that is, environment elements in the environment template may also be other to-be-displayed articles. In this case, if the first user is interested in another article in the environment when viewing a currently displayed article, and the first user hopes to view an effect of the another article in a virtual environment again, the first user may perform a selection operation on the another article in a current display interface. Further, the data service platform may display a display interface corresponding to the another article in response to the selection operation, and display a display image with the another article as a main view angle in the display interface. In the process, it is equivalent to starting another processing process. The another article selected by the user is used as a to-be-displayed article, and processing of step S101 to step S103 is performed. Online furniture display is still used as an example. For example, a merchant, as the second user, uses a sofa as a displayed article. When the first user views the sofa, a coffee table is configured in an environment template, and the coffee table may adopt an appearance of a coffee table being sold by the second user. If the first user is also interested in the coffee table, the first user may trigger a display process of the coffee table by clicking/tapping the coffee table in a display interface. In a new display process, the coffee table, as a core article, is displayed in a display image at a main view angle.

According to the article display processing method provided in this embodiment of this application, a to-be-displayed article is fused with a preset environment template for article display, allowing a user to efficiently observe a display effect of the article in an environment. In addition, in a generated display image, the displayed article is used as a first view angle, allowing the user to more intuitively and completely observe a display state of the article in the environment.

### Embodiment 2

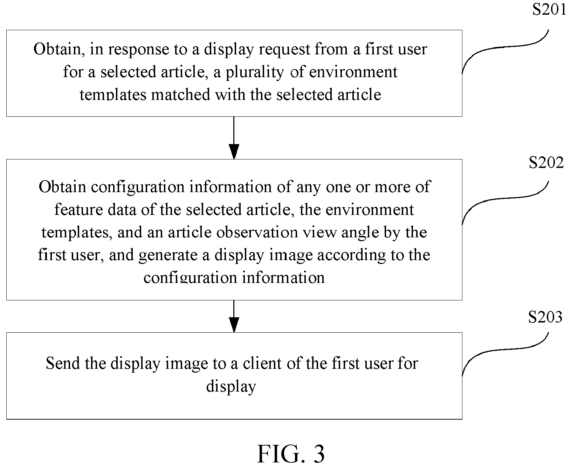

FIG. 3 is a second schematic flowchart of an article display processing method, according to an embodiment of this application. The method is similarly applicable to a data service platform that can provide an article display service. A difference from Embodiment 1 lies in that after a display request from a first user is received, a plurality of matched environment templates configured by a second user are invoked for a first user to perform selection, and after the first user performs a configuration operation, a display image is generated. Specifically, the method includes the following steps.

S201. Obtain, in response to a display request from a first user for a selected article, a plurality of environment templates matched with the selected article. As described in the foregoing embodiment, the plurality of matched environment templates are pre-configured by the second user.

S202. Obtain configuration information of any one or more of feature data of the selected article, the environment templates, and an article observation view angle by the first user, and generate a display image according to the configuration information. In the method of this embodiment, before a final display image is generated, the first user performs a setting operation on the dimensions of the feature data of the article, the environment templates, and the article observation view angle. The first user may select the feature data of the article and the environment templates within a range pre-configured by the second user. For the observation view angle, the second user may also pre-configure rendering files of several view angles for a combination of each environment template and the article based on a process of pre-configuring the environment templates. Correspondingly, the first user may also select the observation view angle within a range configured by the second user. However, in another implementation, the observation view angle may be changed through online image processing of the data service platform. The second user may configure the environment templates for only the main view angle. If the first user selects another observation view angle, the data service platform performs online image change to generate a corresponding display image.

S203. Send the display image to a client of the first user for display. The step is the same as processing in Embodiment 1.

According to the article display processing method of this embodiment of this application, a to-be-displayed article is fused with a preset environment template for article display, allowing a user to efficiently observe a display effect of the article in an environment. In addition, in this embodiment, before a display image is generated, dimensions of feature data of the article, environment templates, and an article observation view angle are configured by a first user, so that the first user selects, in a more targeted manner, an environment template that meets a requirement of the first user, to achieve a better display effect.

### Embodiment 3

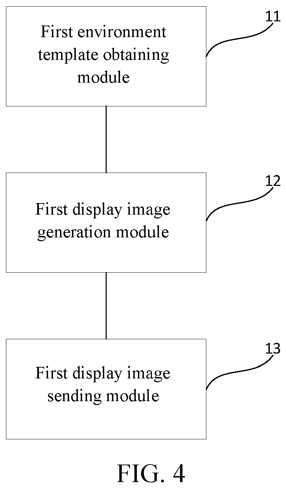

FIG. 4 is a first schematic structural diagram of an article display processing apparatus, according to an embodiment of this application. The apparatus may be disposed on the data service platform. Specifically, the apparatus may include the following modules.

A first environment template obtaining module 11 is configured to obtain, in response to a display request from a first user for a selected article, an environment template corresponding to the article. The display request may be triggered by an operation by the first user on an access interaction interface provided by the data service platform for the article.

A first display image generation module 12 is configured to generate a display image with the selected article as a main view angle according to feature data of the selected article and the environment template.

A first display image sending module 13 is configured to send the display image to a client of the first user for display.

The foregoing modules may correspond to the access interaction module for the first user in FIG. 1. Article display interaction with the first user is completed by using the foregoing modules, and a display image of the article in an environment is provided to the first user. In addition, after viewing the display image fused with the environment template in a display interface, the first user may perform a change operation on environment elements, to trigger the first display image generation module 12 to generate a display image.

In addition, the environment template may be pre-configured by a second user as a provider of article display. Correspondingly, the apparatus may further include the following modules.

A configuration interaction module is configured to select, in response to a configuration operation of a second user on an article, one or more environment templates as environment templates matched with the article from an environment template database, where the environment templates respectively correspond to a plurality of different environment element combinations. After the second user selects the one or more environment templates as the environment templates matched with the article, a rendering file obtained by fusing the article and the environment templates may be further generated and used for the first display image generation module 12 to generate the display image according to a requirement of the second user.

A detailed description of the processing process, a detailed description of the technical principles, and a detailed analysis of the technical effect are made in the foregoing embodiments. Details are not described herein again.

According to the article display processing apparatus provided in this embodiment of this application, a to-be-displayed article is fused with a preset environment template for article display, allowing a user to efficiently observe a display effect of the article in an environment. In addition, in a generated display image, the displayed article is used as a first view angle, allowing the user to more intuitively and completely observe a display state of the article in the environment.

### Embodiment 4

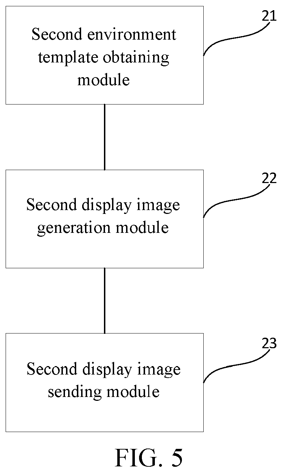

FIG. 5 is a second schematic structural diagram of an article display processing apparatus, according to an embodiment of this application. The apparatus is similarly disposed on the data service platform. A difference from Embodiment 3 lies in that after receiving a display request from a first user, the apparatus invokes a plurality of matched environment templates configured by a second user for a first user to perform selection, and after the first user performs a configuration operation, a display image is generated. Specifically, the apparatus may include the following modules.

A second environment template obtaining module 21 is configured to obtain, in response to a display request from a first user for a selected article, a plurality of environment templates matched with the selected article. As described in the foregoing embodiment, the plurality of matched environment templates are pre-configured by the second user.

A second display image generation module 22 is configured to obtain configuration information of any one or more of feature data of the selected article, the environment templates, and an article observation view angle by the first user, and generate a display image according to the configuration information. In the processing of the second display image generation module 22 of this embodiment, before a final display image is generated, the first user performs a setting operation on the dimensions of the feature data of the article, the environment templates, and the article observation view angle. The first user may select the feature data of the article and the environment templates within a range pre-configured by the second user. For the observation view angle, the second user may also pre-configure rendering files of several view angles for a combination of each environment template and the article based on a process of pre-configuring the environment templates. Correspondingly, the first user may also select the observation view angle within a range configured by the first user. However, in another implementation, the observation view angle may be changed through online image processing of the data service platform. The second user may configure the environment templates for only the main view angle. If the first user selects another observation view angle, the data service platform performs online image change to generate a corresponding display image.

A second display image sending module 23 is configured to send the display image to a client of the first user for display.

According to the article display processing apparatus of this embodiment of this application, a to-be-displayed article is fused with a preset environment template for article display, allowing a user to efficiently observe a display effect of the article in an environment. In addition, in this embodiment, before a display image is generated, dimensions of feature data of the article, environment templates, and an article observation view angle are configured by a first user, so that the first user selects, in a more targeted manner, an environment manner that meets a requirement of the first user, to achieve a better display effect.

### Embodiment 5

This embodiment provides an article display processing method, which is applicable to an application in an e-commerce platform for displaying products to users. For example, a store sales page may display information such as product names, pictures, prices, and details about products sold online. A "product display" button may be set in the page. After a user clicks/taps the button, another product display page may be popped up, so that a product is displayed in a simulated environment, to allow the user to better observe a display effect of the product. Specifically, the article display processing method may include the following steps.

S301. Trigger, in response to a first operation of a user in a first article display interface for displaying basic article information, to enter a second article display interface for displaying a state of an article in a display environment. For example, the user performs some operations (for example, clicking/tapping the "product display" button) on an interface (for example, the mentioned product sales page) for displaying the basic article information, to jump to another display interface for displaying a state of the article placed in an environment.

S302. Load original image data of the article and one or more environment templates. As the second article display interface occurs, original image data of an article and some preset environment templates are loaded for the user to perform selection. The user may further select different environment templates as environment templates matched with the article.

S303. Determine an attribute feature of the article and a selected environment template in response to a configuration operation of the user in the second article display interface. The user performs various configurations in the second article display interface, for example, configuring attribute features such as a size, color, and a model of the article. The options may be pre-configured by a merchant in an e-commerce platform.

S304. Generate, according to the original image data and the attribute feature of the article, and the environment template, a display image in which the article is placed in the environment, and display the display image in the second article display interface. In the generated display image, a default view angle is with the article as a main view angle. That is, without special setting, in the step, the display image with the displayed article as the main view angle is generated.

In addition, the user may further adjust the view angle in the second article display interface. Correspondingly, the method may further include: regenerating, in response to a view angle adjustment operation of the user in the second article display interface, a display image in which the article is displayed in the environment at an adjusted view angle, and displaying the display image in the second article display interface.

According to the article display processing method of this embodiment of this application, a to-be-displayed article is fused with a preset environment template for article display, to allow a user to efficiently observe a display effect of the article in an environment. In a user interaction process, the user may configure an attribute feature and a matched environment template of the article, to allow the user to obtain displayed content and a display effect that the user wants to see.

### Embodiment 6

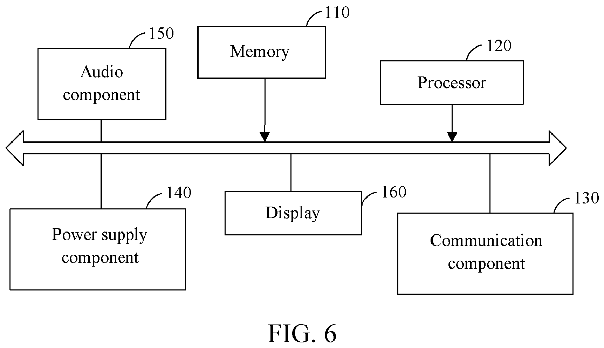

The process processing of the article display processing technology and the apparatus structure are described in the foregoing embodiments. The functions of the method and the apparatus may be completed by using an electronic device. FIG. 6 is a schematic structural diagram of an electronic device, according to an embodiment of this application. The electronic device specifically includes a memory 110 and a processor 120.

The memory 110 is configured to store a program.

In addition to the program, the memory 110 may be further configured to store other data to support operations on the electronic device. Examples of the data include instructions of any application program or method for operations on the electronic device, such as contact data, address book data, a message, a picture, and a video.

The memory 110 can be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The processor 120 is coupled to the memory 110 and configured to execute the program in the memory 110 to perform the operation steps of the article display processing method described in the foregoing embodiments.

In addition, the processor 120 may also include various modules described in the foregoing embodiments to perform article display processing. The memory 110 may be, for example, configured to store data required for and/or outputted by the modules performing the operations.

A detailed description of the processing process, a detailed description of the technical principles, and a detailed analysis of the technical effect are made in the foregoing embodiments. Details are not described herein again.

Further, as shown in the figure, the electronic device may further include: a communication component 130, a power supply component 140, an audio component 150, a display 160, and other components. Only some components are schematically shown in FIG., which does not mean that the electronic device includes only the components shown in the figure.

The communication component 130 is configured to facilitate communication between the electronic device and other devices in a wired or wireless manner. The electronic device may access a communication standard-based wireless network, such as WiFi, 2G, 3G, 4G/LTE, 5G, and other mobile communication networks, or a combination thereof. In an exemplary embodiment, the communication component 130 receives a broadcast signal or broadcast-related information from an external broadcast management system via a broadcast channel. In an exemplary embodiment, the communication component 130 further includes a near field communication (NFC) module, to promote short-range communication. For example, the NFC module may be implemented based on a radio frequency identification (RFID) technology, an infra-red data association (IrDA) technology, an ultra-wideband (UWB) technology, a Bluetooth (BT) technology, and other technologies.

The power supply component 140 provides power for components of the electronic device. The power supply component 140 may include a power supply management system, one or more power supplies, and other components related to generation, management, and allocation of power for the electronic device.

The audio component 150 is configured to output and/or input an audio signal. For example, the audio component 150 includes a microphone (MIC). When the electronic device is in the operating mode, such as a call mode, a record mode, and a speech recognition mode, the microphone is configured to receive an external audio signal. The received audio signal may further be stored in the memory 110 or sent through the communication component 130. In some embodiments, the audio assembly 150 further includes a loudspeaker, configured to output an audio signal.

The display 160 includes a screen, which may include a liquid crystal display (LCD) and a touch panel (TP). If the screen includes a TP, the screen may be implemented as a touchscreen to receive an input signal from the user. The touch panel includes one or more touch sensors to sense a touch, a slide, and a gesture on the touch panel. The touch sensor may not only sense the boundary of touching or sliding operations, but also detect duration and pressure related to the touching or sliding operations.

A person of ordinary skill in the art may understand that all or some of the steps of the method embodiments may be implemented by a program instructing relevant hardware. The program may be stored in a computer-readable storage medium. When the program is executed, steps of the method embodiments are performed. The foregoing storage medium includes: a medium such as a ROM, a RAM, a magnetic disk, or an optical disc that can store program code.

Finally, it should be noted that the foregoing embodiments are merely used for describing the technical solutions of this application, but are not intended to limit this application Although this application is described in detail with reference to the foregoing embodiments, a person of ordinary skill in the art should understand that, modifications may still be made to the technical solutions in the foregoing embodiments, or equivalent replacements may be made to some or all of the technical features; and these modifications or replacements will not cause the essence of corresponding technical solutions to depart from the scope of the technical solutions in the embodiments of this application.

## Claims

1. An article display processing method, comprising:
pre-configuring a plurality of environment templates;
pre-rendering the environment templates;
obtaining (S101), in response to a display request from a first user for a selected article, the environment template corresponding to the article;
generating (S102) a display image with the selected article as a main view angle according to feature data of the selected article and the environment template, wherein the main view angle comprises the article being located at a central position of the display image; and
sending (S103) the display image to a client of the first user for display.

2. The method according to claim 1, further comprising:
updating the display image in a case that the first user changes the feature data of the selected article and/or the environment template, and displaying the updated display image.

3. The method according to claim 1, further comprising:
selecting, in response to a configuration operation of a second user on an article, one or more environment templates as environment templates matched with the article from an environment template database, wherein the environment templates respectively correspond to a plurality of different environment element combinations.

4. The method according to claim 3, wherein after the one or more environment templates are selected as the environment templates matched with the article, a rendering file obtained by fusing the article and the environment templates is generated, and
the generating a display image with the selected article as a main view angle according to feature data of the selected article and the environment template comprises: generating the display image with the selected article as the main view angle according to the feature data of the selected article, the environment template, and the rendering file;
or, wherein the obtaining, in response to a display request from a first user for a selected article, an environment template corresponding to the article comprises:
determining, according to the selected article, matched environment templates corresponding to the selected article; and
selecting the environment template from the matched environment templates for displaying the selected article.

5. The method of claim 4, further comprising:
obtaining a new environment template in response to a change operation of the first user on environment elements in the current environment template, and displaying the selected article based on the new environment template, wherein the change operation on the environment elements is performed within a range of the matched environment templates pre-configured by the second user;
or, wherein the environment elements comprise hard furnishing environment elements and/or soft furnishing environment elements.

6. The method according to claim 1, wherein the environment template comprises another article than the selected article, and the method further comprises:
displaying a display interface corresponding to the another article in response to a selection operation of the first user on the another article, and displaying a display image with the another article as a main view angle in the display interface.

7. An article display processing apparatus,
the apparatus arranged to pre-configure a plurality of environment templates and to pre-render the environment templates;
the apparatus comprising:
a first environment template obtaining module, configured to obtain, in response to a display request from a first user for a selected article, the environment template corresponding to the article;
a first display image generation module, configured to generate a display image with the selected article as a main view angle according to feature data of the selected article and the environment template, wherein the main view angle comprises the article being located at a central position of the display image; and
a first display image sending module, configured to send the display image to a client of the first user for display.

8. The apparatus according to claim 7, further comprising:
a configuration interaction module, configured to select, in response to a configuration operation of a second user on an article, one or more environment templates as environment templates matched with the article from an environment template database, wherein the environment templates respectively correspond to a plurality of different environment element combinations.

9. A computer program product comprising instructions which, when the program is executed by a computer, cause the computer to carry out the method of any one of claims 1 to 6.

10. A computer readable storage medium comprising instructions which, when executed by a computer, cause the computer to carry out the method of any one of claims 1 to 6.

## Patentansprüche

1. Verfahren zum Verarbeiten einer Artikelanzeige, umfassend:
Vorkonfigurieren einer Vielzahl von Umgebungsvorlagen;
Vorrendern der Umgebungsvorlagen;
Erhalten (S101), als Reaktion auf eine Anzeigeanforderung von einem ersten Benutzer für einen ausgewählten Artikel, der dem Artikel entsprechenden Umgebungsvorlage;
Erzeugen (S102) eines Anzeigebildes mit dem ausgewählten Artikel als Hauptansichtswinkel gemäß Merkmalsdaten des ausgewählten Artikels und der Umgebungsvorlage, wobei der Hauptansichtswinkel den Artikel umfasst, der sich in einer mittigen Position des Anzeigebildes befindet; und
Senden (S103) des Anzeigebildes an einen Client des ersten Benutzers zur Anzeige.

2. Verfahren nach Anspruch 1, weiter umfassend:
Aktualisieren des Anzeigebildes, in einem Fall, dass der erste Benutzer die Merkmalsdaten des ausgewählten Artikels und/oder der Umgebungsvorlage ändert, und Anzeigen des aktualisierten Anzeigebildes.

3. Verfahren nach Anspruch 1, weiter umfassend:
Auswählen, als Reaktion auf eine Konfigurationsoperation eines zweiten Benutzers an einem Artikel, einer oder mehrerer Umgebungsvorlagen als Umgebungsvorlagen, die mit dem Artikel aus einer Umgebungsvorlagendatenbank übereinstimmen, wobei die Umgebungsvorlagen jeweils einer Vielzahl von unterschiedlichen Umgebungselementkombinationen entsprechen.

4. Verfahren nach Anspruch 3, wobei, nachdem die eine oder die mehreren Umgebungsvorlagen als die mit dem Artikel übereinstimmenden Umgebungsvorlagen ausgewählt worden sind, eine Rendering-Datei erzeugt wird, die durch Verschmelzung des Artikels und der Umgebungsvorlagen erhalten wird, und
das Erzeugen eines Anzeigebildes mit dem ausgewählten Artikel als Hauptansichtswinkel gemäß Merkmalsdaten des ausgewählten Artikels und der Umgebungsvorlage umfasst: Erzeugen des Anzeigebildes mit dem ausgewählten Artikel als Hauptansichtswinkel gemäß den Merkmalsdaten des ausgewählten Artikels, der Umgebungsvorlage und der Rendering-Datei;
oder, wobei das Erhalten, als Reaktion auf eine Anzeigeanforderung von einem ersten Benutzer für einen ausgewählten Artikel, einer Umgebungsvorlage, die dem Artikel entspricht, umfasst:
Bestimmen, gemäß dem ausgewählten Artikel, übereinstimmender Umgebungsvorlagen, die dem ausgewählten Artikel entsprechen; und
Auswählen der Umgebungsvorlage aus den übereinstimmenden Umgebungsvorlagen zum Anzeigen des ausgewählten Artikels.

5. Verfahren nach Anspruch 4, weiter umfassend:
Erhalten einer neuen Umgebungsvorlage als Reaktion auf eine Änderungsoperation des ersten Benutzers an Umgebungselementen in der aktuellen Umgebungsvorlage und Anzeigen des ausgewählten Artikels basierend auf der neuen Umgebungsvorlage, wobei die Änderungsoperation an den Umgebungselementen innerhalb eines Bereichs der übereinstimmenden, vom zweiten Benutzer vorkonfigurierten Umgebungsvorlagen durchgeführt wird;
oder, wobei die Umgebungselemente harte Einrichtungsumgebungselemente und/oder softe Einrichtungsumgebungselemente umfassen.

6. Verfahren nach Anspruch 1, wobei die Umgebungsvorlage einen anderen Artikel als den ausgewählten Artikel umfasst, und das Verfahren weiter umfasst:
Anzeigen einer Anzeigeschnittstelle, die dem anderen Artikel entspricht, als Reaktion auf eine Auswahloperation des ersten Benutzers an dem anderen Artikel und Anzeigen eines Anzeigebildes mit dem anderen Artikel als Hauptansichtswinkel in der Anzeigeschnittstelle.

7. Einrichtung zur Verarbeiten einer Artikelanzeige,
wobei die Einrichtung angeordnet ist, um eine Vielzahl von Umgebungsvorlagen vorzukonfigurieren und die Umgebungsvorlagen vorzurendern;
wobei die Einrichtung umfasst:
ein erstes Modul zum Erhalten einer Umgebungsvorlage, das konfiguriert ist, um als Reaktion auf eine Anzeigeanforderung von einem ersten Benutzer für einen ausgewählten Artikel, die dem Artikel entsprechende Umgebungsvorlage zu erhalten;
ein erstes Modul zum Erzeugen eines Anzeigebildes, das konfiguriert ist, um ein Anzeigebild mit dem ausgewählten Artikel als Hauptansichtswinkel gemäß Merkmalsdaten des ausgewählten Artikels und der Umgebungsvorlage zu erzeugen, wobei der Hauptansichtswinkel den Artikel umfasst, der sich in einer mittigen Position des Anzeigebildes befindet; und
ein erstes Modul zum Senden eines Anzeigebildes, das konfiguriert ist, um das Anzeigebild an einen Client des ersten Benutzers zur Anzeige zu senden.

8. Einrichtung nach Anspruch 7, weiter umfassend:
ein Konfigurationsinteraktionsmodul, das konfiguriert ist, um als Reaktion auf eine Konfigurationsoperation eines zweiten Benutzers an einem Artikel, eine oder mehrere Umgebungsvorlagen als Umgebungsvorlagen, die mit dem Artikel aus einer Umgebungsvorlagendatenbank übereinstimmen, auszuwählen, wobei die Umgebungsvorlagen jeweils einer Vielzahl von unterschiedlichen Umgebungselementkombinationen entsprechen.

9. Computerprogrammprodukt, das Anweisungen umfasst, die, wenn das Programm von einem Computer ausgeführt wird, den Computer veranlassen, das Verfahren nach einem der Ansprüche 1 bis 6 durchzuführen.

10. Computerlesbares Speichermedium, das Anweisungen umfasst, die, wenn sie von einem Computer ausgeführt werden, den Computer veranlassen, das Verfahren nach einem der Ansprüche 1 bis 6 durchzuführen.

## Revendications

1. Procédé de traitement d'affichage d'articles, comprenant :
la préconfiguration d'une pluralité de modèles d'environnement ;
le pré-rendu des modèles d'environnement ;
l'obtention (S101), en réponse à une demande d'affichage d'un premier utilisateur pour un article sélectionné, le modèle d'environnement correspondant à l'article ;
la génération (S102) d'une image d'affichage avec l'article sélectionné comme angle de vue principal en fonction des données caractéristiques de l'article sélectionné et du modèle d'environnement, dans lequel l'angle de vue principal comprend l'article situé en position centrale de l'image d'affichage ; et
l'envoi (S103) de l'image d'affichage à un client du premier utilisateur pour affichage.

2. Procédé selon la revendication 1, comprenant en outre :
la mise à jour de l'image affichée dans le cas où le premier utilisateur modifie les données caractéristiques de l'article sélectionné et/ou le modèle d'environnement et l'affichage de l'image mise à jour.

3. Procédé selon la revendication 1, comprenant en outre :
la sélection, en réponse à une opération de configuration d'un second utilisateur sur un article, d'un ou plusieurs modèles d'environnement en tant que modèles d'environnement correspondant à l'article provenant d'une base de données de modèles d'environnement, dans lequel les modèles d'environnement correspondent, respectivement, à une pluralité de combinaisons d'éléments d'environnement différentes.

4. Procédé selon la revendication 3, dans lequel, après la sélection d'un ou plusieurs modèles d'environnement en tant que modèles d'environnement correspondant à l'article, un fichier de rendu obtenu par fusion de l'article et des modèles d'environnement est généré, et
la génération d'une image d'affichage avec l'article sélectionné comme angle de vue principal en fonction des données caractéristiques de l'article sélectionné et du modèle d'environnement comprend : la génération de l'image d'affichage avec l'article sélectionné comme angle de vue principal en fonction des données caractéristiques de l'article sélectionné, du modèle d'environnement et du fichier de rendu ;
ou, dans lequel l'obtention, en réponse à une demande d'affichage d'un premier utilisateur pour un article sélectionné, d'un modèle d'environnement correspondant à l'article comprend :
la détermination, en fonction de l'article sélectionné, des modèles d'environnement correspondants à l'article sélectionné ; et
la sélection du modèle d'environnement parmi les modèles d'environnement correspondants pour l'affichage de l'article sélectionné.

5. Procédé selon la revendication 4, comprenant en outre :
l'obtention d'un nouveau modèle d'environnement en réponse à une opération de modification du premier utilisateur sur les éléments d'environnement dans le modèle d'environnement actuel, et l'affichage de l'article sélectionné sur la base du nouveau modèle d'environnement, dans lequel l'opération de modification sur les éléments d'environnement est effectuée dans une plage de modèles d'environnement correspondants préconfigurés par le second utilisateur ;
ou, dans lequel les éléments d'environnement comprennent des éléments d'ameublement rigides et/ou des éléments d'ameublement souple.

6. Procédé selon la revendication 1, dans lequel le modèle d'environnement comprend un autre article que l'article sélectionné, et le procédé comprend en outre :
l'affichage d'une interface d'affichage correspondant à l'autre article en réponse à une opération de sélection du premier utilisateur sur l'autre article, et l'affichage d'une image d'affichage avec l'autre article comme angle de vue principal dans l'interface d'affichage.

7. Appareil de traitement d'affichage d'articles,
l'appareil étant agencé pour préconfigurer une pluralité de modèles d'environnement et pour pré-afficher les modèles d'environnement ;
l'appareil comprenant :
un premier module d'obtention de modèle d'environnement, configuré pour obtenir, en réponse à une demande d'affichage d'un premier utilisateur pour un article sélectionné, le modèle d'environnement correspondant à l'article ;
un premier module de génération d'image d'affichage, configuré pour générer une image d'affichage avec l'article sélectionné comme angle de vue principal en fonction des données caractéristiques de l'article sélectionné et du modèle d'environnement, dans lequel l'angle de vue principal comprend l'article situé en position centrale de l'image d'affichage ; et
un premier module d'envoi d'image d'affichage, configuré pour envoyer l'image d'affichage à un client du premier utilisateur pour affichage.

8. Appareil selon la revendication 7, comprenant en outre :
un module d'interaction de configuration, configuré pour sélectionner, en réponse à une opération de configuration d'un second utilisateur sur un article, un ou plusieurs modèles d'environnement comme modèles d'environnement correspondant à l'article à partir d'une base de données de modèles d'environnement, dans lequel les modèles d'environnement correspondent, respectivement, à une pluralité de combinaisons d'éléments d'environnement différentes.

9. Produit de programme informatique comprenant des instructions qui, lorsque le programme est exécuté par un ordinateur, amènent l'ordinateur à mettre en œuvre le procédé selon l'une quelconque des revendications 1 à 6.

10. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 6.
